# EUROPEAN PATENT SPECIFICATION

(11) **EP 1 246 049 B1**
(45) Date of publication and mention of the grant of the patent: **14.07.2010**
(21) Application number: 02252139.7
(22) Date of filing: 25.03.2002
(51) Int. Cl.: G06F 1/16, G06F 3/033

(54) **Display control method for information processing device**
Verfahren zur Steuerung der Anzeige für eine Informationsverarbeitungsvorrichtung
Méthode de commande d'affichage pour un dispositif de traitement d'information

(30) Priority: 27.03.2001 JP 2001091269
(43) Date of publication of application: 02.10.2002
(73) Proprietor: Sony Corporation, Tokyo 141 (JP)
(72) Inventor: Ogaki, Tadao, c/o Sony Corporation, Shinagawa-ku, Tokyo 141 (JP); Ohata, Tadahiro, c/o Sony Corporation, Shinagawa-ku, Tokyo 141 (JP)
(74) Representative: Turner, James Arthur

(56) References cited:
- WO-A-01/20579
- WO-A-02/46903
- WO-A-98/43202
- GB-A- 2 351 817
- JP-A- 10 240 693
- JP-A- 11 052 845
- US-A- 5 973 915
- US-A- 6 097 371
- US-B- 6 647 338

## Description

### BACKGROUND OF THE INVENTION

### Field of the Invention

This invention relates to an information processing device for controlling an image displayed on a display means as an operating means is operated, and a display control method and a program therefor.

### Description of the Related Art

As portable information terminals among information terminals which are popularly used at present, there are portable telephones, pagers, radio receivers which support FM teletext, and PDAs (personal digital assistants). There also exist composite-type products made up of a combination of such portable information terminals. The pager, as an example of portable information terminal, is a communication tool which enables free reception and transmission of messages (via an operator) and reception of calling. The pager enables display of received information on a display means provided thereon. The pager also has two types of scroll modes, that is, a line scroll mode for scrolling the information displayed on the display means by the line, and a screen scroll mode for scrolling the information by the screen.

In the pager, the line scroll mode and the screen scroll mode are allocated to predetermined operation keys provided thereon. Thus, the user can select a desired scroll mode by operating a predetermined operation key on the pager.

Meanwhile, in the conventional pager, the number of operation keys is limited in order to realize miniaturization and thus improve the portability. Therefore, the scroll direction of the line scroll mode and the screen scroll mode is limited and only downward scroll can be made in general. However, in consideration of the user-friendliness, four scroll directions for Information are desired, that is, up, down, left and right Only the downward scroll is insufficient

WO-A-98/43202 and JP-A-10-240693 describe prior art devices, in particular JP -A- 10 240693 discloses an apparatus in which when in a vertical display mode, when a rotary switch is operated clockwise and upwards along the left side face of the apparatus, contents displayed on the apparatus are scrolled upwards. When the rotary switch is operated counter-clockwise and downwards along the left side face of the apparatus, the contents are scrolled downwards. When the apparatus is in a horizontal display mode, when the rotary switch is rotated clockwise, and upwards along the apparatus left side face the contents displayed on the apparatus are scrolled upwards.

US -B- 6,647,338 (Hamberger et al) describes a navigation device for installation in a motor vehicle. The navigation device has a monitor on which a plurality of images, including a map image can be displayed. The device includes a rotary switch. A cursor can be moved around the image by combinations of rotations and depressions of the rotary switch.

### SUMMARY OF THE INVENTION

An illustrative embodiment of the present invention seeks to provide an information processing device capable of controlling display of map information without increasing the number of operation keys, and a display control method and a program therefor.

An information processing device according to one or the present invention is provided in claim 1 appended hereto.

A method and program according to aspects of the present invention are also provided in claims 9 and 17 appended hereto.

### BRIEF DESCRIPTION OF THE DRAWINGS

The invention will now be described by way of example with reference to the accompanying drawing, throughout which like parts are referred to by like references, and in which:
Fig. 1 shows the appearance of a portable telephone, which is an example of portable information terminal as an embodiment of the present invention.
Fig.2 shows the appearance of a PDA, which is an example of portable information terminal as the embodiment of the present invention.
Fig.3 shows the schematic structure of an internal circuit section of the portable information terminal as the embodiment of the present invention.
Fig.4 illustrates images displayed on a display unit of the portable information terminal as the embodiment of the present invention.
Fig.5 is a flowchart showing the processing for controlling an image by the portable information terminal as the embodiment of the present invention.

### DESCRIPTION OF THE PREFERRED EMBODIMENTS

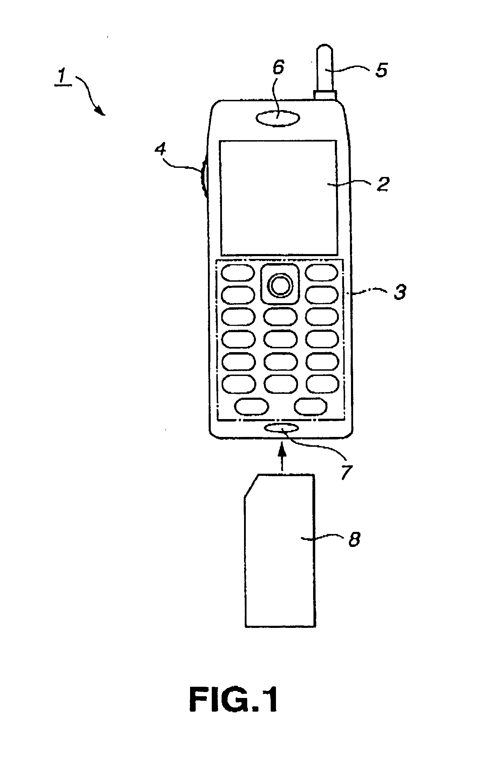

Hereinafter, a preferred embodiment of the present invention will be described in detail with reference to the drawings. In the embodiment, the present invention is applied to portable information terminals such as a portable telephone and a PDA (personal digital assistant). Fig.1 shows the appearance of a portable telephone. A portable telephone 1 has a shape of a substantially rectangular box-like casing similar to the conventional one, and has a display unit 2, an input unit 3, a speaker 6 and a microphone 7 on its face side, and a operating dial 4 and an external antenna 5 on its lateral sides. The portable telephone 1 also can accommodate a thin plate-shaped external recording medium 8 which is freely attachable/removable, for example, a memory stick (trade name by Sony Corporation) or a memory card.

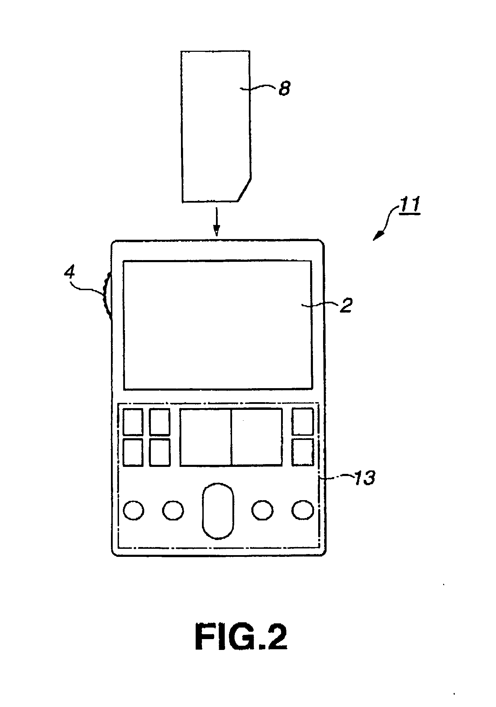

Fig.2 shows the appearance of a PDA. A PDA 11 has a shape of a substantially rectangular box-like casing, and has a display unit 2 and an operation input unit 13 on its face side and an operating dial 4 on its lateral side. The PDA 11 also can accommodate a thin plate-shaped external recording medium 8 which is freely attachable/removable, similarly to the portable telephone 1.

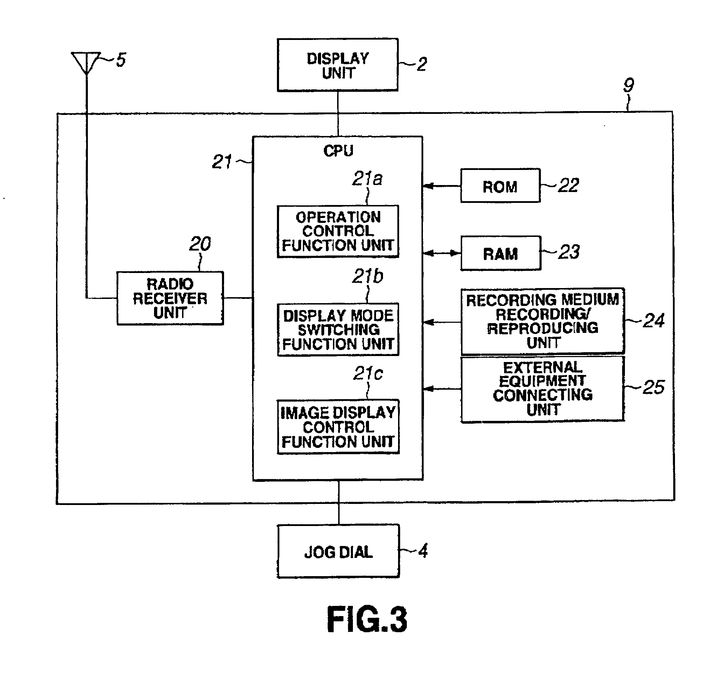

The schematic structure of an internal circuit section 9 which is common to the above-described portable telephone 1 and PDA 11 will now be described with reference to Fig.3. The internal circuit section 9 shown in Fig.3 includes at least a radio receiver unit 20, a CPU (central processing unit)21, a ROM (read only memory) 22, a RAM (random access memory) 23, a recording medium recording/reproducing unit 24, and an external equipment connecting unit 25.

Functional blocks representing the functions to be executed by the CPU 21 may include an operation control function unit 21a for controlling the operations of the respective units executed by various programs, a display mode switching function unit 21b as a display mode switching means for switching the display mode of an image displayed on the display unit 2, and an image display control function unit 21c as an image display control means for carrying out display control of an image displayed on the display unit 2 as the operating dial 4 is rotated.

The functions of the respective units will now be described. The display unit 2 is, for example, an LCD (liquid crystal display), on which information is displayed as an image. The operating dial 4 is a conventionally used disc-shaped operating means and has a function to select predetermined information by a rotating operation and a function to decide predetermined information by a press or push operation (hereinafter referred to as click).

The radio receiver unit 20 receives information transmitted from a source station via the antenna 5. The RAM 23 is an area used for storage and expansion of information. The information received by the radio receiver unit 20 or the like is stored in this RAM 23. The recording medium recording/reproducing unit 24 reproduces information recorded on the thin plate-shaped recording medium 8 loaded on a loading part, not shown, provided in the recording medium recording/reproducing unit 24. The external equipment connecting unit 25 is connected with an external equipment. In the ROM 22, programs for controlling the operations of the respective units are stored. The operation control function unit 21a executes various programs stored in the ROM 22 and thus controls the operations of the respective units. For example, the operation control function unit 21a instantly processes information transmitted from the source station and displays the processed information as an image on the display unit 2. The operation control function unit 21a also receives from the source station all the necessary information for executing scroll and zooming of an image, which will be described later, then stores the information to the RAM 23, and displays the information stored in the RAM 23 onto the display unit 2 as an image. The operation control function unit 21a also displays the information recorded on the thin plage-shaped external recording medium 8 loaded in the recording medium recording/reproducing unit 24 or the information recorded in the external equipment connected to the external equipment connecting unit 25, onto the display unit 2 as an image.

The display mode switching function unit 21b switches the display mode of an image displayed on the display unit 2 in accordance with clicking of the operating dial 4. When the display mode resulting from switching by the display mode switching function unit 21b is a scroll mode, the image display control function unit 21c scrolls the image displayed on the display unit 2 in accordance with a rotating operation of the operating dial 4. When the display mode resulting from switching by the display mode switching function unit 21b is a zooming mode, the image display control function unit 21c changes the display scale of the image displayed on the display unit 2 in accordance with a rotating operation of the operating dial 4.

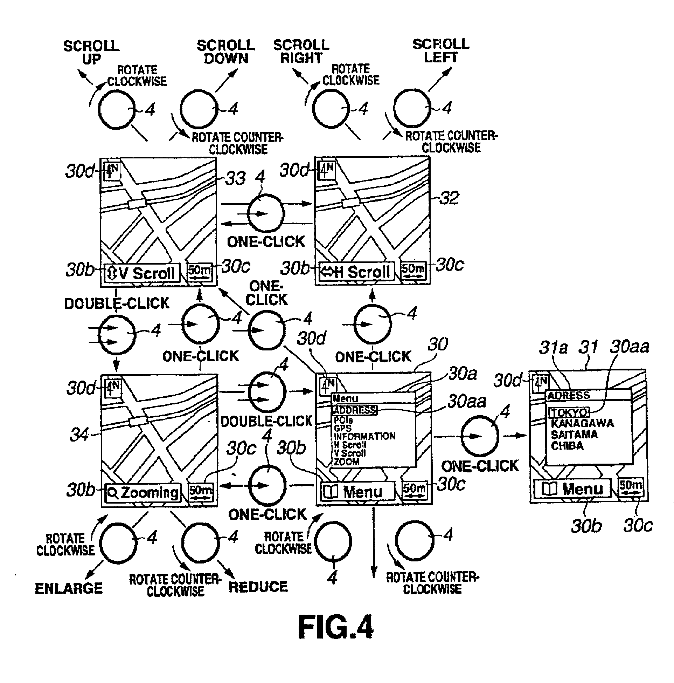

Fig.4 shows images displayed on the display unit 2 by the portable information terminal, constituted as described above, in accordance with an operation to the operating dial 4. It is assumed that an initial image displayed on the display unit 2 is a map image. If the operating dial 4 is clicked once (hereinafter referred to as one-click) when this map image is displayed, a menu mode display image 30 will be displayed. In this menu mode display image 30, a display mode title list 30a, a display mode 30b indicating the current display mode, a scale 30c and a direction 30d are displayed on the map image.

The display mode title list 30a shows a list of a plurality of display mode titles and is placed near the center of the menu mode display image 30. The display mode 30b contains the name of the current display mode and an icon which enables visual recognition of the display mode name, and is placed at a lower left part of the menu mode display image 30. In the menu mode display image 30, "Menu" is displayed as the display mode name and an icon in the form of a spread book is displayed. The scale 30c contains a line with arrows indicating a reference distance and the numerical value of the reference distance, and is placed at a lower right part of the menu mode display image 30. The direction 30d is placed at an upper left part of the menu mode display image 30. These display mode 30b, scale 30c and direction 30d are also contained in an [H Scroll] mode display image 32, a [V Scroll] mode display image 33 and a [Zoom] mode display image 34, which will be described later, and are placed at the same positions.

If the operating dial 4 is rotated when the menu mode display image 30 is displayed, a selection bar 30aa will shift which is selecting a predetermined display mode title in the display mode title list 30a. Then, if the operating dial 4 is one-clicked, the selected display mode title will be decided and that display mode will be started. With respect to the shift of the selection bar 30aa, if the operating dial 4 is rotated clockwise, the selection bar 30aa will shift upward along a plurality of display mode titles forming an array. On the contrary, if the operating dial 4 is rotated counterclockwise, the selection bar 30aa will shift downward along a plurality of display mode titles forming an array. Moreover, in the display mode title list 30a, a plurality of display mode titles are displayed such as [H Scroll] (horizontal or left-and-right scroll), [V Scroll] (vertical or up-and-down scroll), [Zoom] (enlargement/reduction), [Address] (place name-map access), [POIs] (point-map access), [GPS] (current position-map access), and [Information] (information display).

If the operating dial 4 is one-clicked when [Address] is selected in the menu mode display image 30, a place name display image 31 will be displayed. In this place name display image 31, a place name list 31a, the display mode 30b, the scale 30c and the direction 30d are displayed. The place name list 31a shows a list of a plurality of place names and is placed near the center of the place name display image 31. The user can shift the selection bar 30aa within the place name list 31a and thus can select and decide a desired place name.

If the operating dial 4 is one-clicked when [H Scroll] is selected in the menu mode display image 30, an [H Scroll] mode display image 32 will be displayed. If the operating dial 4 is one-clicked when [V Scroll] is selected, a [V Scroll] mode display image 33 will be displayed. If the operating dial 4 is one-clicked when [Zoom] is selected, a [Zoom] mode display image 34 will be displayed.

To switch these menu mode display image 30, [H Scroll] mode display image 32, [V Scroll] mode display image 33 and [Zoom] mode display image 34, clicking of the operating dial 4 is used. Specifically, if the operating dial 4 is one-clicked when the [H Scroll] mode display image 32 is displayed, the [V Scroll] mode display image 33 will be displayed. On the contrary, if the operating dial 4 is one-clicked when the [V Scroll] mode display image 33 is displayed, the [H Scroll] mode display image 32 will be displayed.

Moreover, if the operating dial 4 is quickly clicked twice (hereinafter referred to as double-click) when the [V Scroll] mode display image 33 is displayed, the [Zoom] mode display image 34 will be displayed. On the contrary, if the operating dial 4 is one-clicked when the [Zoom] mode display image 34 is displayed, [V Scroll] mode display image 33 will be displayed. If the operating dial 4 is double-clicked when the [Zoom] mode display image 34 is displayed, the menu mode display image 30 will be displayed.

In these [H Scroll] mode display image 32, [V Scroll] mode display image 33 and [Zoom] mode display image 34, the display mode 30b, the scale 30c and the direction 30d are displayed on the map image as described above. The display mode 30b on the [H Scroll] mode display image 32 contains a display mode name "H Scroll" and an icon in the form of a bold arrow in the left-and-right direction. The display mode 30b on the [V Scroll] mode display image 33 contains a display mode name "V Scroll" and an icon in the form of a bold arrow in the up-and-down direction. The display mode 30b on the [Zoom] mode display image 34 contains a display mode "Zooming" and an icon in the form of a magnifying glass. With respect to the scale 30c on the [Zoom] mode display image 34, the numerical value of the reference distance is changed in accordance with enlargement or reduction of the map image.

In the [H Scroll] mode display image 32, the [V Scroll] mode display image 33 and the [Zoom] mode display image 34, the display of the map image is controlled by rotating the operating dial 4. Specifically, if the operating dial 4 is rotated clockwise when the [H Scroll] mode display image 32 is displayed, the map image will be scrolled right. If the operating dial 4 is rotated counterclockwise, the map image will be scrolled left. If the operating dial 4 is rotated clockwise when the [V Scroll] mode display image 33 is displayed, the map image will be scrolled up. If the operating dial 4 is rotated counterclockwise, the map image will be scrolled down. In this manner, two-dimensional scroll is made by the one-dimensional operation of the operating dial 4. Moreover, if the operating dial 4 is rotated clockwise when the [Zoom] mode display image 34 is displayed, the map image will be enlarged (narrowed). If the operating dial 4 is rotated counterclockwise, the map image will be reduced (widened).

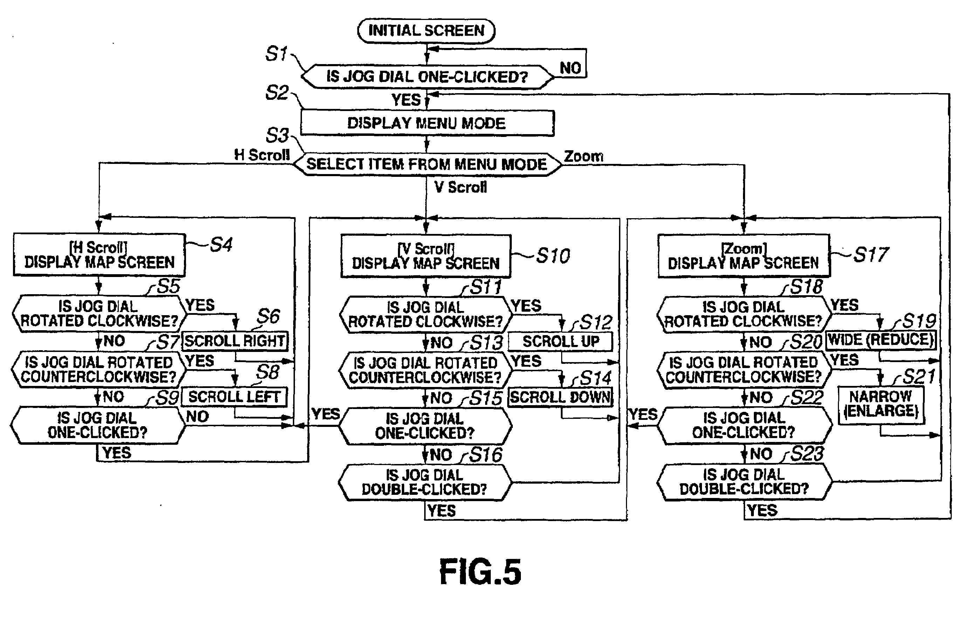

The processing for switching the plurality of images displayed as described above and the processing for controlling the images, by the internal circuit section 9 of the portable information terminal, will now be described with reference to the flowchart of Fig.5. At step S1, if the display mode switching function unit 21b recognized one-click of the operating dial 4 when a map image was displayed on the display unit 2 (YES), the processing goes to step S2. At step S2, the display mode switching function unit 21b causes the display unit 2 to display the menu mode display image 30 thereon. The display mode title list 30a in the menu mode display image 30 contains [H Scroll], [V Scroll], [Zoom], [Address], [POIs], [GPS], [Information] and the like, as described above.

On the other hand, if the display mode switching function unit 21b did not recognize one-click of the operating dial 4 when a map image was displayed on the display unit 2 (NO), the portable information terminal is in the standby state.

At step S3, if the display mode switching function unit 21b recognized one-click of the operating dial 4 when [H Scroll] was selected by a rotating operation of the operating dial 4, the processing goes to step S4. Meanwhile, if the display mode switching function unit 21b recognized one-click of the operating dial 4 when [V Scroll] was selected by a rotating operation of the operating dial 4, the processing goes to step S10. If the display mode switching function unit 21b recognized one-click of the operating dial 4 when [Zoom] is selected by a rotating operation of the operating dial 4, the processing goes to step S17.

In this manner, the display mode switching function unit 21b switches the menu mode display image 30 to a predetermined display mode in accordance with the operation of the operating dial 4 at step S3. Hereinafter, the processing after the display mode switching function unit 21b recognizes one-click of the operating dial 4 when [H Scroll], [V Scroll] or [Zoom] is selected will be described, respectively.

First, at step S4, the display mode switching function unit 21b causes the display unit 2 to display the [H Scroll] mode display image 32 thereon. Then, at step S5 and step S7, the image display control function unit 21c recognizes whether the operating dial 4 is rotated clockwise or counterclockwise. If the display image control function unit 21c recognizes clockwise rotation of the operating dial 4 (YES) at step S5, the image display control function unit 21c at step S6 causes the map image to be scrolled right in accordance with the rotation of the operating dial 4.

On the other hand, if the image display control function unit 21c did not recognize clockwise rotation of the operating dial 4 (NO) at step S5 and recognized counterclockwise rotation of the operating dial 4 (YES) at step S7, the image display control function unit 21c at step S8 causes the map image to be scrolled left in accordance with rotation of the operating dial 4.

If the image display control function unit 21c did not recognize counterclockwise rotation of the operating dial 4 (NO) at step S7, that is, if the operating dial 4 was not rotated in either direction, the processing goes to step S9. If the display mode switching function unit 21b did not recognize one-click of the operating dial 4 (NO) at step S9, the processing returns to the above-described step S4 and the display of the [H Scroll] mode display image 32 on the display unit 2 is continued.

Meanwhile, if the display mode switching function unit 21b recognized one-click of the operating dial 4 (YES) at step S9, the display mode switching function unit 21b at step S10 switches the display mode and causes the display unit 2 to display the [V Scroll] mode display image 33 thereon. The other processing for displaying the [V Scroll] mode display image 33 is carried out if the display mode switching function unit 21b recognized one-click of the operating dial 4 when [V Scroll] was selected in the display mode title list 30a in the menu mode display image 30, as described above with respect to step S3.

Then, at step S11 and step S13, the image display control function unit 21c recognizes whether the operating dial 4 is rotated clockwise or counterclockwise. If the image display control function unit 21c recognized clockwise rotation of the operating dial 4 (YES) at step S11, the image display control function unit 21c at step S12 causes the map image to be scrolled up in accordance with the rotation of the operating dial 4.

On the other hand, if the image display control function unit 21c did not recognize clockwise rotation of the operating dial 4 (NO) at step S11 and recognized counterclockwise rotation of the operating dial 4 (YES) at step S13, the image display control function unit 21c at step S14 causes the map image to be scrolled down in accordance with the rotation of the operating dial 4.

If the image display control function unit 21c did not recognize counterclockwise rotation of the operating dial 4 (NO) at step S13, that is, if the operating dial 4 was not rotated in either direction, the processing goes to step S15.

Then, at step S15 and step S16, the display mode switching function unit 21b recognizes whether operating dial 4 is one-clicked or double-clicked. If the display mode switching function unit 21b recognized one-click of the operating dial (YES) at step S15, the processing returns to the above-described step S4 and the display mode switching function unit 21b switches the display mode and causes the display unit 2 to display the [H Scroll] mode display image 32 thereon.

On the other hand, if the display mode switching function unit 21b did not recognize one-click of the operating dial 4 (NO) at step S15 and recognized double-click of the operating dial 4 (YES) at step S16, the display mode switching function unit 21b at step S17 switches the display mode and causes the display unit 2 to display the [Zoom] mode display image 34 thereon. The other processing for displaying the [Zoom] mode display image 34 is carried out if the display mode switching function unit 21b recognized one-click of the operating dial 4 when [Zoom] was selected in the display mode title list 30a in the menu mode display image 30, as described above with respect to step S3.

If the display mode switching function unit 21b did not recognize double-click of the operating dial 4 (NO) at step S16, that is, if the operating dial 4 was not clicked at all, the processing returns to the above-described step S10 and the display of the [V Scroll] mode display image 33 on the display unit 2 is continued.

After the [Zoom] mode display image 34 is displayed at step S17, the image display control function unit 21c recognizes whether the operating dial 4 is rotated clockwise or counterclockwise, at step S18 and step S20. If the image display control function unit 21c recognized clockwise rotation of the operating dial 4 (YES) at step S18, the image display control function unit 21c at step S19 causes the map image to be displayed on a reduced scale in accordance with the rotation of the operating dial 4.

On the other hand, if the image display control function unit 21c did not recognize clockwise rotation of the operating dial 4 (NO) at step S18 and recognized counterclockwise rotation of the operating dial 4 (YES) at step S20, the image display control function unit 21c at step S21 causes the map image to be displayed on an enlarged scale in accordance with the rotation of the operating dial 4.

If the image display control function unit 21c did not recognize counterclockwise rotation of the operating dial 4 (NO) at step S20, that is, if the operating dial 4 was not rotated in either direction, the processing goes to step S22.

Then, at step S22 and step S23, the display mode switching function unit 21b recognizes whether the operating dial 4 is one-clicked or double-clicked. If the display mode switching function unit 21b recognized one-click of the operating dial 4 (YES) at step S22, the processing returns to the above-described step S10 and the display mode switching function unit 21b switches the display mode and causes the display unit 2 to display the [V Scroll] mode display image 33 thereon.

On the other hand, if the display mode switching function unit 21b did not recognize one-click of the operating dial 4 (NO) at step S22 and recognized double-click of the operating dial 4 (YES) at step S23, the display mode switching function unit 21b switches the display mode and causes the display unit 2 to display the menu mode display image 30, similarly to the above-described step S2.

If the display mode switching function unit 21b did not recognize double-click of the operating dial 4 (NO) at step S23, that is, if the operating dial 4 was not clicked at all, the processing returns to the above-described step S17 and the display of the [Zoom] mode display image 34 on the display unit 2 is continued.

The processing for switching the menu mode display image 30, the [H Scroll] mode display image 32, the [V Scroll] mode display image 33 and the [Zoom] mode display image 34 and the processing for controlling the respective images by the internal circuit section 9 are described above in detail. The display modes [Address], [POIs], [GPS] and [Information] listed in the above-described display mode title list 30a will now be described. The user can acquire a map image showing an area near a certain place name, a certain point, or the current position, by using these display modes.

First, if the display mode switching function unit 21b recognized one-click of the operating dial 4 when [Address] was selected, the display mode switching function unit 21b causes the display unit 2 to display a place name list thereon. Moreover, if the display mode switching function unit 21b recognized one-click of the operating dial 4 when a predetermined place name was selected in the place name list, the display mode switching function unit 21b causes the display unit 2 to display a map image of an area near that place name.

If the display mode switching function unit 21b recognized one-click of the operating dial 4 when [POIs] was selected, the display mode switching function unit 21b causes the display unit 2 to display a point (landmark) list thereon, Moreover, if the display mode switching function unit 21b recognized one-click of the operating dial 4 when a predetermined point was selected in the point list, the display mode switching function unit 21b causes the display unit 2 to display a map image of an area near that point.

If the display mode switching function unit 21b recognized one-click of the operating dial 4 when [GPS] was selected, the display mode switching function unit 21b causes the display unit 2 to display a map image of an area near the current position calculated by using the GPS (Global Positioning System).

If the display mode switching function unit 21b recognized one-click of the operating dial 4 when [Information] was selected, the display mode switching function unit 21b causes the display unit 2 to display the place name or point information of a point near the center of the map image.

As described above in detail, in the portable information terminal according to the embodiment of the present invention, the display mode switching function unit 21b switches the display mode of the map image when it recognized clicking of the operating dial 4. Moreover, if the switched display mode is the [H Scroll] mode, the image display control function unit 21c scrolls the map image leftward or rightward when it recognized rotation of the operating dial 4. If the switched display mode is the [V Scroll] mode, the image display control function unit 21c scrolls the map image upward and downward when it recognized rotation of the operating dial 4. If the switched display mode is the [Zoom] mode, the image display control function unit 21c caused the map image to be displayed on an enlarged or reduced scale when it recognized rotation of the operating dial 4. Thus, the user can easily switch the [H Scroll] mode, the [V Scroll] mode and the [Zoom] mode, simply by clicking the operating dial 4 provided on the portable information terminal. Moreover, the user can easily scroll the map image in the [H Scroll] mode and the [V Scroll] mode and enlarge or reduce the display of the map image in the [Zoom] mode, simply by rotating the operating dial 4.

While a map image is set as an initial image in the above-described embodiment, the present invention is not limited to this and, for example, a weather chart that can be seen as a text may be employed as an initial image. While the display mode switching function unit 21b switches the [V Scroll] mode display image 33 and the [Zoom] mode display image 34 in the above-described embodiment, for example, switching between the [H Scroll] mode display image 32 and the [Zoom] mode display image 34 can be easily realized.

As described above, in the illustrative information processing device the display mode switching means switches the display mode of an image displayed on the display means in accordance with an operation to the operating means. The image display control means carries out display control of the image displayed on the display means in accordance with an operation to the operating means in the switched display mode. Thus, the user can easily switch the display mode simply by operating the operating means provided on the information processing device. Moreover, the user can control the display image in accordance with the display mode simply by operating the operating means.

In the illustrative display control method for the information processing device at the display mode switching step, the display mode of an image displayed on the display means is switched in accordance with an operation to the operating means. At the image display control step, display control of the image displayed on the display means is carried out in accordance with an operation to the operating means in the switched display mode. Thus, the user can easily switch the display mode simply by operating the operating means provided on the information processing device. Moreover, the user can control the display image in accordance with the display mode simply by operating the operating means.

In the illustrative program at the display mode switching step, the display mode of an image displayed on the display means is switched in accordance with an operation to the operating means. At the image display control step, display control of the image displayed on the display means is carried out in accordance with an operation to the operating means in the switched display mode. Thus, the user can easily switch the display mode simply by operating the operating means provided on the information processing device. Moreover, the user can control the display image in accordance with the display mode simply by operating the operating means.

## Claims

1. An information processing device (1) comprising:
a display means (2) for displaying a map image thereon,
an operating means (4) for controlling the information processing device (1);
a display mode switching means (21b) for switching the display mode of the map image displayed on the display means (2) in accordance with an operation to the operating means (4);
an image display control means (21c) for carrying out display control of the map image displayed on the display means (21) when operating in the current display mode in accordance with operations to the operating means (4) wherein
when the display mode of the map image displayed on the display means is one of a vertical scroll mode having a vertical scroll axis and horizontal scroll mode having a horizontal scroll axis, the display mode switching means is operable, in accordance with an operation to press the operating means (4) once, to switch the display mode between the vertical and horizontal scroll modes , thereby enabling a user to select one of the horizontal scroll mode and the vertical scroll mode, and
in accordance with a rotation operation of the operating means (4), the image display control means (21c) is operable to control a direction of displacement of the map image of the display means along the scroll axis of the selected scroll mode; and
wherein when the display mode of the map image displayed on the display means is a scroll mode, the display mode switching means switches the display mode to a zooming mode, which is a display mode in which the image display control means changes the display scale of the map image displayed on the display means in accordance with a rotating operation of the operating means, in accordance with an operation to quickly press the operating means (4) twice.

2. The information processing device as claimed in claim 1, wherein the display mode switching means (21 b) switches the display mode to a menu mode, which is one of display modes, in accordance with an operation of the operating means (4).

3. The information processing device as claimed in claim 1, wherein the operating means (4) is an operating dial operable to carry out rotating and pressing operations.

4. The information processing device as claimed in claim 3, wherein when the display mode of the image displayed on the display means is the zooming mode, the display mode switching means switches the display mode to a scroll mode in accordance with an operation to press the operating dial once.

5. The information processing device as claimed in claim 1, comprising a receiving means for receiving information transmitted from a source station, wherein the map image is displayed on the basis of the information received by the receiving means.

6. The information processing device as claimed in claim 1, comprising a recording means for recording information, wherein the map image is displayed on the basis of the information recorded on the recording means.

7. The information processing device as claimed in claim 1, comprising a recording medium connecting means for connecting an external recording medium, wherein the map image is displayed on the basis of information recorded on the external recording medium connected to the recording medium connecting means.

8. The information processing device as claimed in claim 1, comprising an external equipment connecting means for connecting an external equipment, wherein the map image is displayed on the basis of information recorded in the external equipment connected to the external equipment connecting means.

9. A display control method for an information processing device (1) having a display means (2) for displaying a map image thereon and an operating means (4) for controlling the information processing device (2), the method comprising:
a display mode switching step of switching the display mode of the map image displayed on the display means (2) in accordance with an operation to the operating means (4);
an image display control step of carrying out display control of the map image displayed on the display means (2) when operating in the current display mode in accordance with operations of the operating means (4), wherein
when the display mode of the map image displayed on the display means is one of a vertical scroll mode having a vertical scroll axis and horizontal scroll mode, having a horizontal scroll axis, the display mode switching means is operable, in accordance with an operation to press the operating means (4) once to switch the display mode between the vertical and horizontal scroll modes, thereby enabling a user to select one of the horizontal scroll mode and the vertical scroll mode, and
in accordance with a rotation operation of the operating means (4), the image display control means (21 c) is operable to control a direction of displacement of the map image of the display means, along the scroll axis of the selected scroll mode; and
wherein when the display mode of the map image displayed on the display means is a scroll mode, at the display mode switching step, the display mode is switched to a zooming mode, which is a display mode in which at the image display control step, the display scale of the map image displayed on the display means is changed in accordance with a rotating operation of the operating means, in accordance with an operation to quickly press the operating means twice.

10. The display control method as claimed in claim 9, wherein at the display mode switching step, the display mode is switched to a menu mode, which is one of display modes, in accordance with an operation of the operating means (4).

11. The display control method as claimed in claim 9, wherein operating means (4) is an operating dial and which carries out rotating and pressing operations.

12. The display control method as claimed in claim 11, wherein when the display mode of the map image displayed on the display means is a zooming mode, at the display mode switching step, the display mode is switched to a scroll mode in accordance with an operation to press the operating dial once.

13. The display control method as claimed in claim 9, wherein the map image is displayed on the basis of information transmitted from a source station.

14. The display control method as claimed in claim 9, wherein the map image is displayed on the basis of information recorded on a recording means.

15. The display control method as claimed in claim 9, wherein the map image is displayed on the basis of information recorded on an external recording medium.

16. The display control method as claimed in claim 9, wherein the map image is displayed on the basis of information recorded in an external equipment that can be connected.

17. A computer program having computer readable instructions which, when loaded on an information processing device (1) having a display means (2) and an operating means (4), configure the information processing device (1) to perform the method of any one of claims 9 to 16.

18. A storage medium configured to store the computer program of claim 17 thereon.

## Patentansprüche

1. Informationsverarbeitungsvorrichtung (1), aufweisend:
eine Anzeigeeinrichtung (2) zum Anzeigen eines Kartenbilds darauf,
eine Bedienungseinrichtung (4) zur Steuerung der Informationsverarbeitungsvorrichtung (1),
eine Anzeigemodus-Schalteinrichtung (21b) zum Schalten des Anzeigemodus des auf der Anzeigeeinrichtung (2) angezeigten Kartenbilds entsprechend einer Bedienung an der Bedienungseinrichtung (4),
eine Bildanzeige-Steuerungseinrichtung (21c) zum Ausführen einer Anzeigesteuerung (21) des angezeigten Kartenbilds, wenn im laufenden Anzeigemodus entsprechend Bedienungen an der Bedienungseinrichtung (4) bedient wird, wobei,
wenn der Anzeigemodus des auf der Anzeigeeinrichtung angezeigten Kartenbilds einer von einem eine vertikale Scrollachse aufweisenden Vertikalscrollmodus und einem eine horizontale Scrollachse aufweisenden Horizontalscrollmodus ist, die Anzeigemodus-Schalteinrichtung betriebsfähig ist, entsprechend einer Bedienung zum Drücken der Bedienungseinrichtung (4) einmal, den Anzeigemodus zwischen dem Vertikal- und Horizontalscrollmodus zu schalten und dadurch einem Benutzer zu ermöglichen, vom Horizontalscrollmodus und Vertikalscrollmodus einen auszuwählen, und
entsprechend einer Drehbedienung der Bedienungseinrichtung (4), die Bildanzeige-Steuerungseinrichtung (21c) betriebsfähig ist, eine Verschieberichtung des Kartenbilds der Anzeigeeinrichtung entlang der Scrollachse des ausgewählten Scrollmodus zu steuern, und
wobei, wenn der Anzeigemodus des auf der Anzeigeeinrichtung angezeigten Kartenbilds ein Scrollmodus ist, die Anzeigemodus-Schalteinrichtung den Anzeigemodus in einen Zoomingmodus, der ein Anzeigemodus ist, bei dem die Bildanzeige-Steuerungseinrichtung den Anzeigemaßstab des auf der Anzeigeeinrichtung angezeigten Kartenbilds entsprechend einer Drehbedienung der Bedienungseinrichtung ändert, schaltet, entsprechend einer Bedienung zum schnellen Drücken der Bedienungseinrichtung (4) zweimal.

2. Informationsverarbeitungsvorrichtung nach Anspruch 1, wobei die Anzeigemodus-Schalteinrichtung (21b) den Anzeigemodus in einen Menümodus, der einer von Anzeigemoden ist, schaltet, entsprechend einer Bedienung der Bedienungseinrichtung (4).

3. Informationsverarbeitungsvorrichtung nach Anspruch 1, wobei die Bedienungseinrichtung (4) eine Bedienungsscheibe ist, die zum Ausführen von Dreh- und Drückbedienungen betriebsfähig ist.

4. Informationsverarbeitungsvorrichtung nach Anspruch 3, wobei, wenn der Anzeigemodus des auf der Anzeigeeinrichtung angezeigten Bilds der Zoomingmodus ist, die Anzeigemodus-Schalteinrichtung den Anzeigemodus in einen Scrollmodus schaltet, entsprechend einer Bedienung zum Drücken der Bedienungsscheibe einmal.

5. Informationsverarbeitungsvorrichtung nach Anspruch 1, aufweisend eine Empfangseinrichtung zum Empfang von Information, die von einer Quellenstation übertragen wird, wobei das Kartenbild auf der Basis der Information angezeigt wird, die von der Empfangseinrichtung empfangen wird.

6. Informationsverarbeitungsvorrichtung nach Anspruch 1, aufweisend eine Aufzeichnungseinrichtung zur Aufzeichnung von Information, wobei das Kartenbild auf der Basis der Information angezeigt wird, die auf der Aufzeichnungseinrichtung aufgezeichnet ist.

7. Informationsverarbeitungsvorrichtung nach Anspruch 1, aufweisend eine Aufzeichnungsmedium-Anschlusseinrichtung zum Anschließen eines externen Aufzeichnungsmediums, wobei das Kartenbild auf der Basis von Information angezeigt wird, die auf dem externen Aufzeichnungsmedium aufgezeichnet ist, das an der Aufzeichnungsmedium-Verbindungseinrichtung angeschlossen ist.

8. Informationsverarbeitungsvorrichtung nach Anspruch 1, aufweisend eine Extemeinrichtungs-Anschlusseinrichtung zum Anschließen einer externen Einrichtung, wobei das Kartenbild auf der Basis von Information angezeigt wird, die in der externen Einrichtung aufgezeichnet ist, welche an der Externeinrichtungs-Anschlusseinrichtung angeschlossen ist.

9. Anzeigesteuerungsverfahren für eine Informationsverarbeitungsvorrichtung (1), die eine Anzeigeeinrichtung (2) zur Anzeige eines Kartenbilds darauf und eine Bedienungseinrichtung (4) zur Steuerung der Informationsverarbeitungsvorrichtung (2) aufweist, wobei das Verfahren aufweist:
einen Anzeigemodus-Schaltschritt zum Schalten des Anzeigemodus des auf der Anzeigeeinrichtung (2) angezeigten Kartenbilds entsprechend einer Bedienung an der Bedienungseinrichtung (4),
einen Bildauzeige-Steuerungsschritt zur Ausführung einer Anzeigesteuerung des auf der Anzeigeeinrichtung (2) angezeigten Kartenbilds, wenn im laufenden Anzeigemodus entsprechend Bedienungen der Bedienungseinrichtung (4) bedient wird, wobei,
wenn der Anzeigemodus des auf der Anzeigeeinrichtung angezeigten Kartenbilds einer von einem eine vertikale Scrollachse aufweisenden Vertikalscrollmodus und einem eine horizontale Scrollachse aufweisenden Horizontalscrollmodus ist, die Anzeigemodus-Schalteinrichtung betriebsfähig ist, entsprechend einer Bedienung zum Drücken der Bedienungseinrichtung (4) einmal, den Anzeigemodus zwischen dem Vertikal- und Horizontalscrollmodus zu schalten und dadurch einem Benutzer zu ermöglichen, vom Horizontalscrollmodus und Vertikalscrollmodus einen auszuwählen, und,
entsprechend einer Drehbedienung der Bedienungseinrichtung (4), die Bildanzeige-Steuerungseinrichtung (21c) betriebsfähig ist, eine Verschieberichtung des auf der Anzeigeeinrichtung angezeigten Kartenbilds entlang der Scrollachse des ausgewählten Scrollmodus zu schalten, und
wobei, wenn der Anzeigemodus des auf der Anzeigeeinrichtung angezeigten Kartenbilds ein Scrollmodus ist, beim Anzeigemodus-Schaltschritt der Anzeigemodus in einen Zoomingmodus, der ein Anzeigemodus ist, bei dem beim Bildanzeige-Steuerungsschritt der Anzeigemaßstab des auf der Anzeigeeinrichtung angezeigten Kartenbilds entsprechend einer Drehbedienung der Bedienungseinrichtung geändert wird, geschaltet wird, entsprechend einer Bedienung zum schnellen Drücken der Bedienungseinrichtung zweimal.

10. Anzeigesteuerungsverfahren nach Anspruch 9, wobei beim Anzeigemodus-Schaltschritt der Anzeigemodus in einen Menümodus, der einer von Anzeigemoden ist, geschaltet wird, entsprechend einer Bedienung der Bedienungseinrichtung (4).

11. Anzeigesteuerungsverfahren nach Anspruch 9, wobei die Bedienungseinrichtung (4) eine Bedienungsscheibe ist, die Dreh- und Drückbedienungen ausführt.

12. Anzeigesteuerungsverfahren nach Anspruch 11, wobei, wenn der Anzeigemodus des auf der Anzeigeeinrichtung angezeigten Kartenbilds ein Zoomingmodus ist, beim Anzeigemodus-Schaltschritt der Anzeigemodus in einen Scrollmodus geschaltet wird, entsprechend einer Bedienung zum Drücken der Bedienungsscheibe einmal.

13. Anzeigesteuerungsverfahren nach Anspruch 9, wobei das Kartenbild auf der Basis von Information angezeigt wird, die von einer Quellenstation übertragen wird.

14. Anzeigesteuerungsverfahren nach Anspruch 9, wobei das Kartenbild auf der Basis von Information angezeigt wird, die auf einer Aufzeichnungseinrichtung aufgezeichnet ist.

15. Anzeigesteuerungsverfahren nach Anspruch 9, wobei das Kartenbild auf Basis von Information angezeigt wird, die auf einem externen Aufzeichnungsmedium aufgezeichnet ist.

16. Anzeigesteuerungsverfahren nach Anspruch 9, wobei das Kartenbild auf Basis von Information angezeigt wird, die in einer externen Einrichtung, die angeschlossen werden kann, aufgezeichnet ist.

17. Computerprogramm, das computerlesbare Instruktionen aufweist und das, wenn auf einer Informationsverarbeitungsvorrichtung (1) geladen, die eine Anzeigeeinrichtung (2) und eine Bedienungseinrichtung (4) aufweist, die Informationsverarbeitungsvorrichtung (1) zum Ausführen des Verfahrens nach einem der Ansprüche 9 bis 16 konfiguriert.

18. Speichermedium, konfiguriert zum Speichern eines Computerprogramms nach Anspruch 17 darauf.

## Revendications

1. Dispositif de traitement d'informations (1), comportant :
un moyen d'affichage (2) pour afficher une image cartographique sur celui-ci ;
un moyen de commande (4) pour commander le dispositif de traitement d'informations (1) ;
un moyen de commutation de mode d'affichage (21b) pour commuter le mode d'affichage de l'image cartographique affichée sur le moyen d'affichage (2) selon une opération mise en oeuvre au niveau du moyen de commande (4) ;
un moyen de commande d'affichage de l'image (21c) pour mettre en oeuvre une commande d'affichage de l'image cartographique affichée sur le moyen d'affichage (21) lors d'un fonctionnement en mode d'affichage en cours, selon des opérations au niveau du moyen de commande (4), dans lequel ;
lorsque le mode d'affichage de l'image cartographique affichée sur le moyen d'affichage est l'un parmi un mode de défilement vertical présentant un axe de défilement vertical et un mode de défilement horizontal présentant un axe de défilement horizontal, le moyen de commutation de mode d'affichage est exploitable, selon une opération consistant à appuyer une fois sur le moyen de commande (4), pour commuter le mode d'affichage entre le mode de défilement horizontal et le mode de défilement vertical, ce qui permet par conséquent à un utilisateur de sélectionner un mode parmi le mode de défilement horizontal et le mode de défilement vertical, et
selon une opération de rotation du moyen de commande (4), le moyen de commande d'affichage de l'image (21c) est exploitable pour commander un sens de déplacement de l'image cartographique du moyen d'affichage le long de l'axe de défilement du mode de défilement sélectionné ; et
dans lequel, lorsque le mode d'affichage de l'image cartographique affichée sur le moyen d'affichage est un mode de défilement, le moyen de commutation de mode d'affichage commute le mode d'affichage vers un mode d'agrandissement, lequel est un mode d'affichage dans lequel le moyen de commande d'affichage de l'image modifie l'échelle d'affichage de l'image cartographique affichée sur le moyen d'affichage selon une opération de rotation du moyen de commande, conformément à une opération consistant à appuyer rapidement deux fois sur le moyen de commande (4).

2. Dispositif de traitement d'informations selon la revendication 1, dans lequel le moyen de commutation de mode d'affichage (21b) commute le mode d'affichage vers un mode de menu, lequel représente l'un des modes d'affichage, selon une opération du moyen de commande (4).

3. Dispositif de traitement d'informations selon la revendication 1, dans lequel le moyen de commande (4) est un cadran de commande exploitable pour mettre en oeuvre des opérations de pression et de rotation.

4. Dispositif de traitement d'informations selon la revendication 3, dans lequel, lorsque le mode d'affichage de l'image affichée sur le moyen d'affichage est le mode d'agrandissement, le moyen de commutation de mode d'affichage commute le mode d'affichage vers un mode de défilement, selon une opération consistant à appuyer une fois sur le cadran de commande.

5. Dispositif de traitement d'informations selon la revendication 1, comportant un moyen de réception pour recevoir des informations transmises à partir d'une station source, dans lequel l'image cartographique est affichée sur la base des informations reçues par le moyen de réception.

6. Dispositif de traitement d'informations selon la revendication 1, comportant un moyen d'enregistrement pour enregistrer des informations, dans lequel l'image cartographique est affichée sur la base des informations enregistrées sur le moyen d'enregistrement.

7. Dispositif de traitement d'informations selon la revendication 1, comportant un moyen de connexion de support d'enregistrement pour connecter un support d'enregistrement externe, dans lequel l'image cartographique est affichée sur la base d'informations enregistrées sur le support d'enregistrement externe connecté au moyen de connexion de support d'enregistrement.

8. Dispositif de traitement d'informations selon la revendication 1, comportant un moyen de connexion d'équipement externe pour connecter un équipement externe, dans lequel l'image cartographique est affichée sur la base d'informations enregistrées dans l'équipement externe connecté au moyen de connexion d'équipement externe.

9. Procédé de commande d'affichage destiné à un dispositif de traitement d'informations (1) présentant un moyen d'affichage (2) pour afficher une image cartographique sur celui-ci et un moyen de commande (4) pour commander le dispositif de traitement d'informations (2), le procédé comportant :
une étape de commutation de mode d'affichage consistant à commuter le mode d'affichage de l'image cartographique affichée sur le moyen d'affichage (2) selon une opération mise en oeuvre sur le moyen de commande (4) ;
une étape de commande d'affichage de l'image consistant à mettre en oeuvre une commande d'affichage de l'image cartographique affichée sur le moyen d'affichage (2) lors du fonctionnement en mode d'affichage en cours, selon des opérations du moyen de commande (4), dans lequel :
lorsque le mode d'affichage de l'image cartographique affichée sur le moyen d'affichage est l'un parmi un mode de défilement vertical présentant un axe de défilement vertical et un mode de défilement horizontal présentant un axe de défilement horizontal, le moyen de commutation de mode d'affichage est exploitable, selon une opération consistant à appuyer une fois sur le moyen de commande (4), pour commuter le mode d'affichage entre le mode de défilement horizontal et le mode de défilement vertical, ce qui permet par conséquent à un utilisateur de sélectionner l'un parmi le mode de défilement horizontal et le mode de défilement vertical, et
selon une opération de rotation du moyen de commande (4), le moyen de commande d'affichage de l'image (21c) est exploitable pour commander un sens de déplacement de l'image cartographique du moyen d'affichage, le long de l'axe de défilement du mode de défilement sélectionné ; et
dans lequel lorsque le mode d'affichage de l'image cartographique affichée sur le moyen d'affichage est un mode de défilement, au cours de l'étape de commutation de mode d'affichage, le mode d'affichage est commuté vers un mode d'agrandissement, lequel est un mode d'affichage dans lequel au cours de l'étape de commande d'affichage de l'image, l'échelle d'affichage de l'image cartographique affichée sur le moyen d'affichage est modifiée selon une opération de rotation du moyen de commande, par une opération consistant à appuyer brièvement à deux reprises sur le moyen de commande.

10. Procédé de commande d'affichage selon la revendication 9, dans lequel au cours de l'étape de commutation de mode d'affichage, le mode d'affichage est commuté vers un mode de menu, lequel représente l'un des modes d'affichage, selon une opération du moyen de commande (4).

11. Procédé de commande d'affichage selon la revendication 9, dans lequel le moyen de commande (4) représente un cadran de commande et lequel met en oeuvre des opérations de pression et de rotation.

12. Procédé de commande d'affichage selon la revendication 11, dans lequel, lorsque le mode d'affichage de l'image cartographique affichée sur le moyen d'affichage est un mode d'agrandissement, au cours de l'étape de commutation de mode d'affichage, le mode d'affichage est commuté vers un mode de défilement selon une opération consistant à appuyer une fois sur le cadran de commande.

13. Procédé de commande d'affichage selon la revendication 9, dans lequel l'image cartographique est affichée sur la base d'informations transmises à partir d'une station source.

14. Procédé de commande d'affichage selon la revendication 9, dans lequel l'image cartographique est affichée sur la base d'informations enregistrées sur un moyen d'enregistrement.

15. Procédé de commande d'affichage selon la revendication 9, dans lequel l'image cartographique est affichée sur la base d'informations enregistrées sur un support d'enregistrement externe.

16. Procédé de commande d'affichage selon la revendication 9, dans lequel l'image cartographique est affichée sur la base d'informations enregistrées dans un équipement externe lequel peut être connecté.

17. Programme informatique présentant des instructions lisibles par un ordinateur lesquelles, lorsqu'elles sont chargées sur un dispositif de traitement d'informations (1) présentant un moyen d'affichage (2) et un moyen de commande (4), configurent le dispositif de traitement d'informations (1) afin qu'il mette en oeuvre le procédé selon l'une quelconque des revendications 9 à 16.

18. Support de stockage configuré pour stocker le programme informatique selon la revendication 17.
